# EUROPEAN PATENT APPLICATION

(11) **EP 4 503 648 A1**
(43) Date of publication of application: **05.02.2025**
(21) Application number: 22933595.5
(22) Date of filing: 11.10.2022
(51) Int. Cl.: H04R 5/02, H04S 3/00

(54) **SOUNDBAR DEVICE AND METHOD FOR SETTING UP SOUNDBAR DEVICE**

(30) Priority: 24.03.2022 JP 2022049172
(71) Applicant: D&M Holdings Inc., Kawasaki-shi Kanagawa 210-8569 (JP)
(72) Inventor: YOSHIDA Yukihiro, Kawasaki-shi, Kanagawa 210-8569 (JP)
(74) Representative: Mewburn Ellis LLP
(86) International application number: PCT/JP2022/037764
(87) International publication number: WO 2023/181465

(57) **Abstract**

To provide a soundbar device with which an optimal surround environment can be achieved in accordance with the screen width of a television device. [Solution] A soundbar device 1 comprises a first housing 10 to a third housing 12 each of which houses a speaker, a second housing 11 is attachable and detachable on the left side of the first housing 10, and the third housing 12 is attachable and detachable on the right side of the first housing 10. Moreover, the first housing 10 is a main housing, while the second housing 11 and third housing 12 are sub-housings. The main housing extracts and reproduces an audio signal of a channel assigned to the speaker housed in itself from a multi-channel audio signal received from a television device 3 and outputs the reproduced audio signal from the speaker, and extracts and transmits an audio signal of a channel assigned to the speaker provided in each of sub-housings to each of the sub-housings. Each of the sub-housings receives and reproduces the audio signal from the main housing and outputs the reproduced audio signal from the speaker housed in itself.

## Description

### Technical Field

The present invention relates to a sound bar device.

### Background Art

In recent years, home theater systems in which a sound bar device is combined with a television device have become widespread. A sound bar device is a speaker system configured to accommodate speakers of a plurality of channels in the same housing. Compared to installing a speaker for each channel individually, installation space efficiency is better and the installation work is easier. Therefore, through use of a sound bar device, a surround sound audio reproduction environment can be easily achieved even in an ordinary home with limited space (for example, Patent Literature 1).

### Citation List

### Patent Literature

[PTL 1] JP 2009-55450 A

### Summary of Invention

### Technical Problem

In general, in the sound bar device, a speaker of each channel is accommodated in a housing with a predetermined layout so that an optimum surround sound environment can be achieved when the sound bar device is installed below the television device. However, in recent years, in a television device using a liquid crystal display (LCD), an organic electro luminescence (EL) display, or the like, a screen has been increased in size. When the width of the sound bar device is narrow as compared with such a television device having a large-size screen, the spread of the surround sound becomes insufficient as compared with the size of the video displayed on the screen, and thus an optimum surround sound environment cannot be achieved. Meanwhile, replacing of the sound bar device every time the television device is replaced with a television device having a large-size screen to adapt to the screen width of the television device causes a great increase in cost.

The present invention has been made in view of the above-mentioned circumstances, and has an object to provide a sound bar device capable of achieving an optimum surround sound environment corresponding to a screen width of a television device.

### Solution to Problem

In order to solve the above-mentioned problems, a sound bar device of the present invention includes: a first housing including, in a front surface thereof, a speaker to which a center channel is assigned; a second housing including, in a front surface thereof, a speaker to which a left channel is assigned, the second housing being removable from and mountable on a left side of the first housing; and a third housing including, in a front surface thereof, a speaker to which a right channel is assigned, the third housing being removable from and mountable on a right side of the first housing. One of those first to third housings is a main housing, and the remaining two thereof are sub-housings. The main housing receives a multi-channel audio signal transmitted from an external device (audio-visual device such as a television device), and extracts and reproduces an audio signal of the channel assigned to the speaker included in the own main housing from this multi-channel audio signal, and outputs the reproduced audio signal from this speaker. In addition, the main housing extracts an audio signal of the channel assigned to the speaker included in each sub-housing to transmit the audio signal to this sub-housing. Meanwhile, each of the sub-housings receives the audio signal from the main housing to reproduce the audio signal, and outputs the reproduced audio signal from the speaker accommodated in the own sub-housing.

For example, according to one embodiment of the present invention, there is provided a sound bar device including a plurality of speakers, the sound bar device further including: a first housing including, in a front surface thereof, a corresponding one of the plurality of speakers to which a center channel is assigned; a second housing including, in a front surface thereof, a corresponding one of the plurality of speakers to which a left channel is assigned, the second housing being removable from and mountable on a left side of the first housing; and a third housing including, in a front surface thereof, a corresponding one of the plurality of speakers to which a right channel is assigned, the third housing being removable from and mountable on a right side of the first housing; wherein one of the first housing, the second housing, and the third housing is a main housing, and remaining two thereof are sub-housings, wherein the main housing includes: external device connection means for connecting to an external device configured to transmit a multi-channel audio signal; main reproduction means for extracting and reproducing, from the multi-channel audio signal received from the external device, an audio signal of a channel assigned to the corresponding one of the plurality of speakers included in the main housing, and outputting the reproduced audio signal from the corresponding one of the plurality of speakers; and audio signal transmission means for extracting, for each of the sub-housings, from the multi-channel audio signal received from the external device, an audio signal of a channel assigned to the corresponding one of the plurality of speakers included in the each of the sub-housings, and transmitting the extracted audio signal to the each of the sub-housings, and wherein each of the sub-housings includes: audio signal reception means for receiving the audio signal from the main housing; and sub-reproduction means for reproducing the audio signal received from the main housing and outputting the reproduced audio signal from the corresponding one of the plurality of speakers included in the each of the sub-housings.

### Advantageous Effects of Invention

According to the present invention, the second housing accommodating the speaker to which the left channel is assigned and the third housing accommodating the speaker to which the right channel is assigned are each removable from the first housing accommodating the speaker to which the center channel is assigned. Thus, when the width of the sound bar device is narrow as compared with the screen width of the television device which is the external device, the second housing and the third housing are separated from the first housing, and those first to third housings are arranged in accordance with the screen width of the television device. Thus, an optimum surround sound environment corresponding to the screen width of the television device can be achieved.

### Brief Description of Drawings

FIG. 1 is a schematic configuration diagram of a home theater system including a sound bar device (1) according to one embodiment of the present invention.
FIG. 2(A) to FIG. 2(D) are a schematic front view, a schematic top view, a schematic left side view, and a schematic right side view of the sound bar device (1), respectively.
FIG. 3 is a schematic functional configuration diagram of a first housing (10) which is a main housing.
FIG. 4 is a schematic functional configuration diagram of a second housing (11) which is a sub-housing.
FIG. 5 is a schematic functional configuration diagram of a third housing (12) which is a sub-housing.
FIG. 6 is an explanatory flow chart for illustrating operation mode setting processing of the sound bar device (1).
FIG. 7 is an explanatory view for illustrating an installation example in a default reproduction mode of the sound bar device (1).
FIG. 8 is an explanatory view for illustrating an installation example in a channel change reproduction mode of the sound bar device (1).

### Description of Embodiments

One embodiment of the present invention is described below with reference to the drawings.

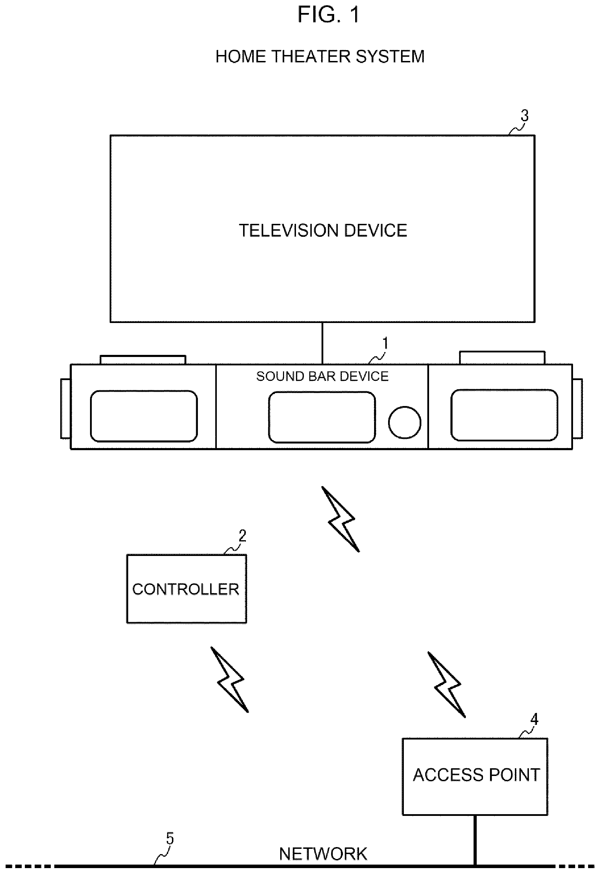

FIG. 1 is a schematic configuration diagram of a home theater system including a sound bar device 1 according to this embodiment.

As illustrated in the figure, the home theater system in this embodiment includes the sound bar device 1, a controller 2 for remotely controlling the sound bar device 1, and a television device 3 using an LCD, an organic EL display, or the like.

The sound bar device 1 and the television device 3 are connected to each other by a communication interface such as high-definition multimedia interface (HDMI (trademark)). Further, the sound bar device 1 and the controller 2 are connected to each other via an access point 4 connected to a network 5 such as a wide area network (WAN) or a local area network (LAN).

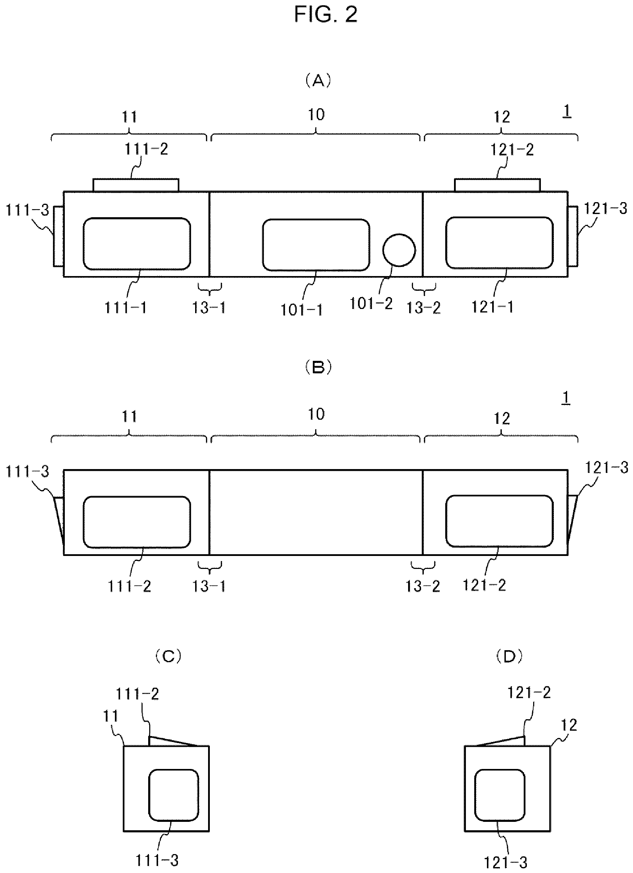

FIG. 2(A) to FIG. 2(D) are a schematic front view, a schematic top view, a schematic left side view, and a schematic right side view of the sound bar device 1, respectively.

As illustrated in the figures, the sound bar device 1 includes a first housing 10 which is a main housing, and a second housing 11 and a third housing 12 which are sub-housings.

The first housing 10 and the second housing 11 are provided with a mounting/removing mechanism 13-1 for removably mounting the second housing 11 on the left side of the first housing 10. This mounting/removing mechanism 13-1 may couple the two housings 10 and 11 to each other by a mechanical structure of two parts, such as providing a protruding portion in any one of a left side surface of the first housing 10 and a right side surface of the second housing 11 and providing a recessed portion to be fitted to this protruding portion in another one thereof, or may couple the two housings 10 and 11 to each other through use of a physical force acting between the two members, such as installing a magnet on any one of the left side surface of the first housing 10 and the right side surface of the second housing 11 and installing a metal plate to be attracted to this magnet on another one thereof.

Further, the first housing 10 and the third housing 12 are provided with a mounting/removing mechanism 13-2 for removably mounting the third housing 12 on the right side of the first housing 10. Similarly to the mounting/removing mechanism 13-1, this mounting/removing mechanism 13-2 may couple the two housings 10 and 12 to each other by a mechanical structure of two parts, such as installing a protruding portion in any one of a right side surface of the first housing 10 and a left side surface of the third housing 12 and installing a recessed portion to be fitted to this protruding portion in another one thereof, or may couple the two housings 10 and 12 to each other through use of a physical force acting between the two members, such as installing a magnet on any one of the right side surface of the first housing 10 and the left side surface of the third housing 12 and installing a metal plate to be attracted to this magnet on another one thereof.

In the first housing 10, a center channel speaker 101-1 and a subwoofer channel speaker 101-2 are arranged in a front surface thereof. In the second housing 11, a left channel speaker 111-1, a height channel speaker 111-2, and a left surround channel speaker 111-3 are arranged in a front surface, an upper surface, and a left side surface thereof, respectively. In addition, in the third housing 12, a right channel speaker 121-1, a height channel speaker 121-2, and a right surround channel speaker 121-3 are arranged in a front surface, an upper surface, and a right side surface thereof, respectively.

In this case, the left surround channel speaker 111-3 is installed in the left side surface of the second housing 11 to emit the sound to the front left, and the right surround channel speaker 121-3 is installed in the right side surface of the third housing 12 to emit the sound to the front right. In addition, the height channel speakers 111-2 and 121-2 are installed in the respective upper surfaces of the second housing 11 and the third housing 12 to emit the sounds to the upper front.

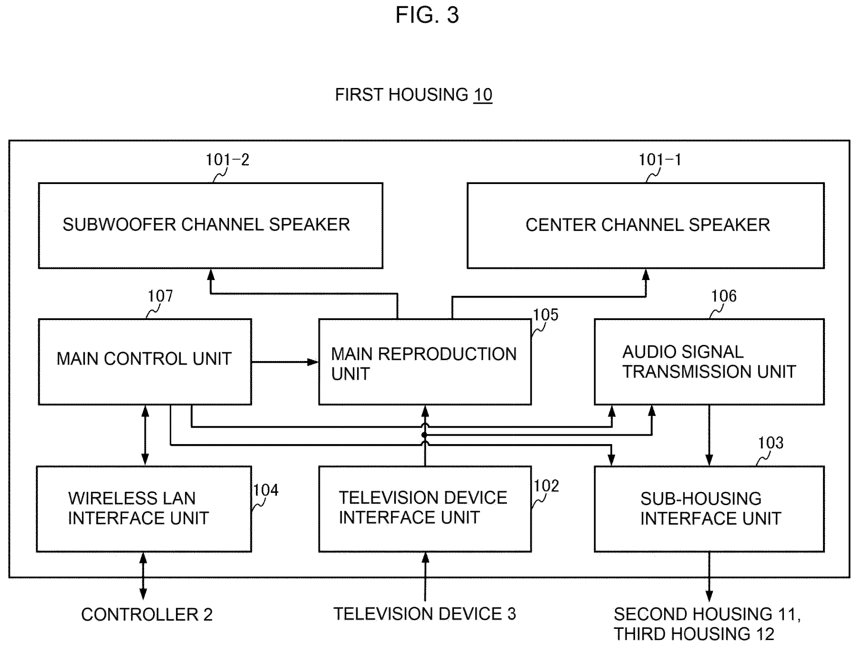

FIG. 3 is a schematic functional configuration diagram of the first housing 10 which is the main housing.

As illustrated in the figure, the first housing 10 which is the main housing includes, in addition to the center channel speaker 101-1 and the subwoofer channel speaker 101-2 described above, a television device interface unit 102, a sub-housing interface unit 103, a wireless LAN interface unit 104, a main reproduction unit 105, an audio signal transmission unit 106, and a main control unit 107.

The television device interface unit 102 is a communication interface for connecting to the television device 3 by HDMI (trademark).

The sub-housing interface unit 103 is a communication interface for connecting to the second housing 11 and the third housing 12 which are the sub-housings by short-range wireless communication such as Bluetooth (trademark).

The wireless LAN interface unit 104 is a communication interface for connecting to the access point 4 through use of the wireless LAN connection.

The main reproduction unit 105 extracts and reproduces, from a multi-channel audio signal received from the television device 3 via the television device interface unit 102, an audio signal of a channel assigned to the speaker accommodated in the own main housing, and outputs the reproduced audio signal from the speaker accommodated in the own main housing. In this embodiment, the main reproduction unit 105 extracts and reproduces, from the multi-channel audio signal, audio signals of the center channel and the subwoofer channel, and outputs the reproduced audio signals from the center channel speaker 101-1 and the subwoofer channel speaker 101-2, respectively.

The audio signal transmission unit 106 extracts, for each sub-housing, from the multi-channel audio signal received from the television device 3 via the television device interface unit 102, an audio signal of a channel assigned to the speaker accommodated in the sub-housing, and transmits the audio signal to this sub-housing from the sub-housing interface unit 103.

In this embodiment, when the second housing 11 and the third housing 12 which are the sub-housings are in a default reproduction mode to be described later, the audio signal transmission unit 106 extracts, from the multi-channel audio signal, audio signals of a left channel, a left surround channel, and a height channel, and transmits a multi-channel audio signal including those audio signals to the second housing 11. In addition, the audio signal transmission unit 106 extracts, from the multi-channel audio signal, audio signals of a right channel, a right surround channel, and a height channel, and transmits a multi-channel audio signal including those audio signals to the third housing 12. Further, when the second housing 11 and the third housing 12 which are the sub-housings are in a channel change reproduction mode to be described later, the audio signal transmission unit 106 extracts, from the multi-channel audio signal, audio signals of a right channel, a right surround channel, and a height channel, and transmits a multi-channel audio signal including those audio signals to the second housing 11. In addition, the audio signal transmission unit 106 extracts, from the multi-channel audio signal, audio signals of a left channel, a left surround channel, and a height channel, and transmits a multi-channel audio signal including those audio signals to the third housing 12.

The main control unit 107 controls each of the speakers and units 101-1, 101-2, and 102 to 106 of the first housing 10 which is the main housing in an integrated manner.

Further, when the main control unit 107 receives a channel change instruction from the controller 2 via the wireless LAN interface unit 104, the main control unit 107 causes the second housing 11 and the third housing 12 which are the sub-housings to shift from the default reproduction mode to the channel change reproduction mode.

Specifically, the channels assigned to the left channel speaker 111-1, the height channel speaker 111-2, and the left surround channel speaker 111-3 accommodated in the second housing 11 are changed to the right channel, the right surround channel, and the height channel, respectively, and a channel change notification is transmitted to the second housing 11 via the sub-housing interface unit 103. Further, the channels assigned to the right channel speaker 121-1, the height channel speaker 121-2, and the right surround channel speaker 121-3 accommodated in the third housing 12 are changed to the left channel, the left surround channel, and the height channel, respectively, and a channel change notification is transmitted to the third housing 12 via the sub-housing interface unit 103.

Further, when the main control unit 107 receives a channel restoration instruction from the controller 2 via the wireless LAN interface unit 104, the main control unit 107 causes the second housing 11 and the third housing 12 which are the sub-housings to shift from the channel change reproduction mode to the default reproduction mode.

Specifically, the channels assigned to the left channel speaker 111-1, the height channel speaker 111-2, and the left surround channel speaker 111-3 accommodated in the second housing 11 are restored to the left channel, the height channel, and the left surround channel, respectively, and a channel restoration notification is transmitted to the second housing 11 via the sub-housing interface unit 103. Further, the channels assigned to the right channel speaker 121-1, the height channel speaker 121-2, and the right surround channel speaker 121-3 accommodated in the third housing 12 are restored to the right channel, the height channel, and the right surround channel, respectively, and a channel restoration notification is transmitted to the third housing 12 via the sub-housing interface unit 103.

In an initial state of the sound bar device 1 (when the sound bar device 1 is powered on), the second housing 11 and the third housing 12 which are the sub-housings are set to the default reproduction mode, and the main control unit 107 assigns the left channel, the height channel, and the left surround channel to the left channel speaker 111-1, the height channel speaker 111-2, and the left surround channel speaker 111-3 accommodated in the second housing 11, respectively, and assigns the right channel, the height channel, and the right surround channel to the right channel speaker 121-1, the height channel speaker 121-2, and the right surround channel speaker 121-3 accommodated in the third housing 12, respectively.

The function configuration of the first housing 10 which is a main housing illustrated in FIG. 3 may be implemented in the form of hardware by an integrated logic IC such as an application-specific integrated circuit (ASIC) or a field-programmable gate array (FPGA), or may be implemented in the form of software by a computer such as a digital signal processor (DSP).

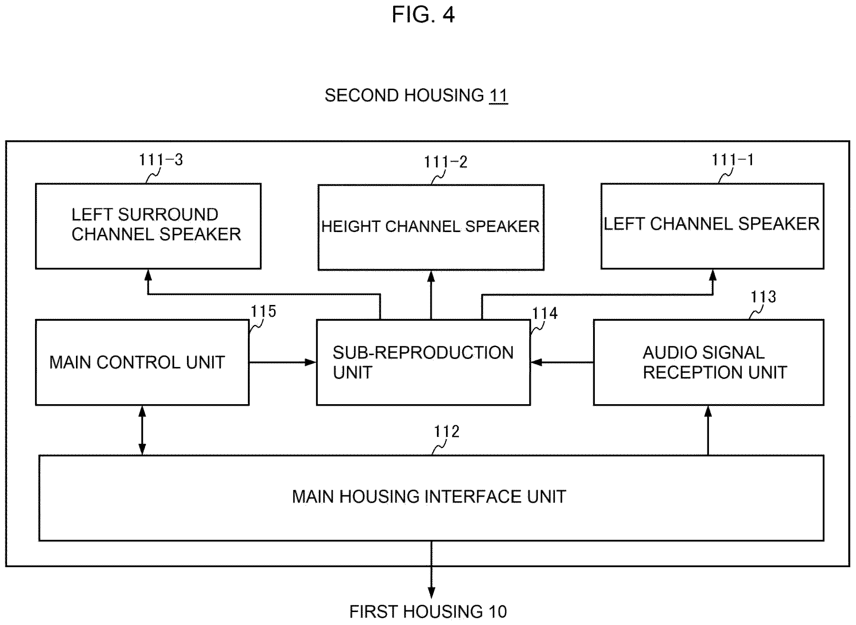

FIG. 4 is a schematic functional configuration diagram of the second housing 11 which is the sub-housing.

As illustrated in the figure, the second housing 11 which is the sub-housing includes, in addition to the left channel speaker 111-1, the height channel speaker 111-2, and the left surround channel speaker 111-3 described above, a main housing interface unit 112, an audio signal reception unit 113, a sub-reproduction unit 114, and a main control unit 115.

The main housing interface unit 112 is a communication interface for connecting to the first housing 10 which is the main housing by short-range wireless communication such as Bluetooth (trademark).

The audio signal reception unit 113 receives, from the first housing 10 which is the main housing via the main housing interface unit 112, a multi-channel audio signal including audio signals of the channels assigned to the speakers 111-1 to 111-3 accommodated in the second housing 11.

The sub-reproduction unit 114 reproduces, for each channel, the multi-channel audio signal received from the first housing 10 which is the main housing by the audio signal reception unit 113, and outputs the reproduced audio signal of each channel from a corresponding one of the speakers 111-1 to 111-3.

Specifically, in the default reproduction mode, the multi-channel audio signal received from the first housing 10 is reproduced for each of the left channel, the height channel, and the left surround channel, and the reproduced left channel audio signal, the reproduced height channel audio signal, and the reproduced left surround channel audio signal are output from the left channel speaker 111-1, the height channel speaker 111-2, and the left surround channel speaker 111-3, respectively. Further, in the channel change reproduction mode, the multi-channel audio signal received from the first housing 10 is reproduced for each of the right channel, the right surround channel, and the height channel, and the reproduced right channel audio signal, the reproduced right surround channel audio signal, and the reproduced height channel audio signal are output from the left channel speaker 111-1, the height channel speaker 111-2, and the left surround channel speaker 111-3, respectively.

The main control unit 115 controls each of the speakers and units 111-1, 111-2, 111-3, and 112 to 114 of the second housing 11 which is the sub-housing in an integrated manner.

Further, when the main control unit 115 receives the channel change notification from the first housing 10 which is the main housing via the main housing interface unit 112, the main control unit 115 changes the reproduction mode of the sub-reproduction unit 114 from the default reproduction mode to the channel change reproduction mode, and when the main control unit 115 receives the channel restoration notification, the main control unit 115 returns the reproduction mode of the sub-reproduction unit 114 from the channel change reproduction mode to the default reproduction mode.

Similarly to the function configuration of the first housing 10 which is the main housing illustrated in FIG. 3, the function configuration of the second housing 11 which is the sub-housing illustrated in FIG. 4 may also be implemented in the form of hardware by an integrated logic IC such as an ASIC or an FPGA, or may be implemented in the form of software by a computer such as a DSP.

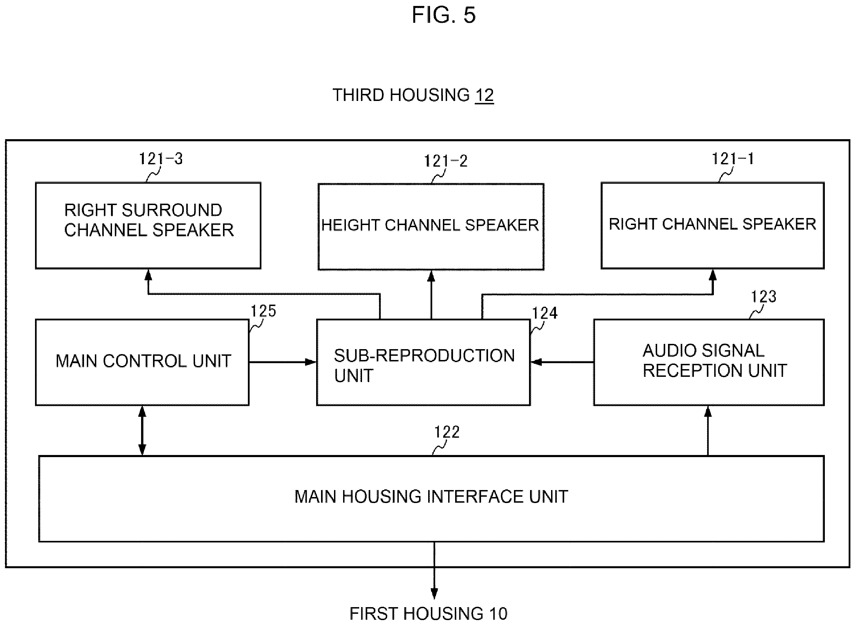

FIG. 5 is a schematic functional configuration diagram of the third housing 12 which is the sub-housing.

As illustrated in the figure, the third housing 12 which is the sub-housing includes, in addition to the right channel speaker 121-1, the height channel speaker 121-2, and the right surround channel speaker 121-3 described above, a main housing interface unit 122, an audio signal reception unit 123, a sub-reproduction unit 124, and a main control unit 125.

The main housing interface unit 122 is a communication interface for connecting to the first housing 10 which is the main housing by short-range wireless communication such as Bluetooth (trademark).

The audio signal reception unit 123 receives, from the first housing 10 which is the main housing via the main housing interface unit 122, a multi-channel audio signal including audio signals of the channels assigned to the speakers 121-1 to 121-3 accommodated in the third housing 12.

The sub-reproduction unit 124 reproduces, for each channel, the multi-channel audio signal received from the first housing 10 which is the main housing by the audio signal reception unit 123, and outputs the reproduced audio signal of each channel from a corresponding one of the speakers 121-1 to 121-3.

Specifically, in the default reproduction mode, the multi-channel audio signal received from the first housing 10 is reproduced for each of the right channel, the height channel, and the right surround channel, and the reproduced right channel audio signal, the reproduced height channel audio signal, and the reproduced right surround channel audio signal are output from the right channel speaker 121-1, the height channel speaker 121-2, and the right surround channel speaker 121-3, respectively. Further, in the channel change reproduction mode, the multi-channel audio signal received from the first housing 10 is reproduced for each of the left channel, the left surround channel, and the height channel, and the reproduced left channel audio signal, the reproduced left surround channel audio signal, and the reproduced height channel audio signal are output from the right channel speaker 121-1, the height channel speaker 121-2, and the right surround channel speaker 121-3, respectively.

The main control unit 125 controls each of the speakers and units 121-1, 121-2, 121-3, and 122 to 124 of the third housing 12 which is the sub-housing in an integrated manner.

Further, when the main control unit 125 receives the channel change notification from the first housing 10 which is the main housing via the main housing interface unit 122, the main control unit 125 changes the reproduction mode of the sub-reproduction unit 124 from the default reproduction mode to the channel change reproduction mode, and when the main control unit 125 receives the channel restoration notification, the main control unit 125 returns the reproduction mode of the sub-reproduction unit 124 from the channel change reproduction mode to the default reproduction mode.

Similarly to the function configuration of the first housing 10 which is the main housing illustrated in FIG. 3 and the function configuration of the second housing 11 which is the sub-housing illustrated in FIG. 4, the function configuration of the third housing 12 which is the sub-housing illustrated in FIG. 5 may also be implemented in the form of hardware by an integrated logic IC such as an ASIC or an FPGA, or may be implemented in the form of software by a computer such as a DSP.

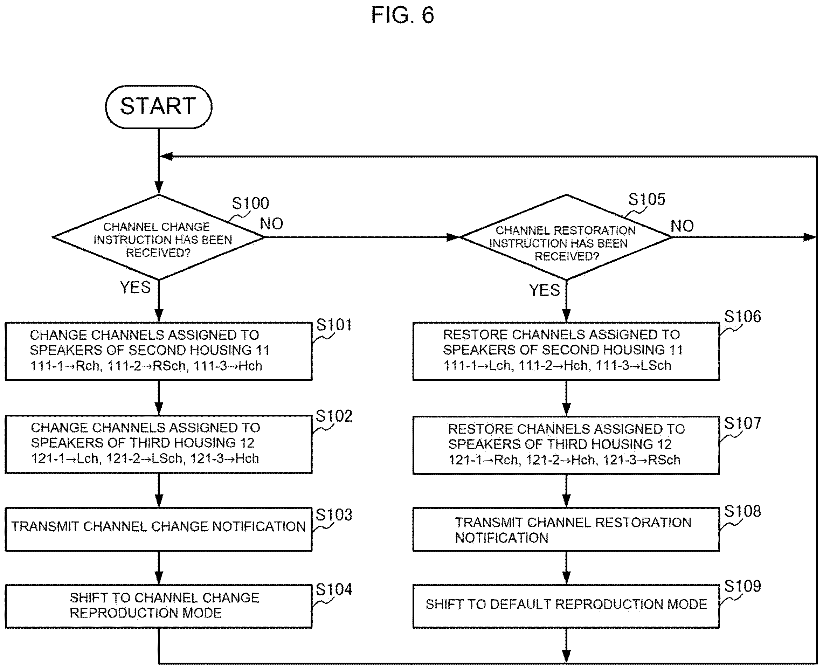

FIG. 6 is an explanatory flow chart for illustrating operation mode setting processing of the sound bar device 1.

When, in the first housing 10 which is the main housing, the main control unit 107 receives the channel change instruction from the controller 2 via the wireless LAN interface unit 104 (YES in Step S100), the main control unit 107 changes the channels assigned to the left channel speaker 111-1, the height channel speaker 111-2, and the left surround channel speaker 111-3 accommodated in the second housing 11 to the right channel, the right surround channel, and the height channel, respectively (Step S101). Further, the main control unit 107 changes the channels assigned to the right channel speaker 121-1, the height channel speaker 121-2, and the right surround channel speaker 121-3 accommodated in the third housing 12 to the left channel, the left surround channel, and the height channel, respectively (Step S102). Then, the main control unit 107 transmits the channel change notification to each of the second housing 11 and the third housing 12 which are the sub-housings via the sub-housing interface unit 103 (Step S103).

Next, when, in the second housing 11 which is the sub-housing, the main control unit 115 receives the channel change notification from the first housing 10 which is the main housing via the main housing interface unit 112, the main control unit 115 causes the reproduction mode of the sub-reproduction unit 114 to shift from the default reproduction mode to the channel change reproduction mode. Similarly, when, in the third housing 12 which is the sub-housing, the main control unit 125 receives the channel change notification from the first housing 10 which is the main housing via the main housing interface unit 122, the main control unit 125 causes the reproduction mode of the sub-reproduction unit 124 to shift from the default reproduction mode to the channel change reproduction mode (Step S104).

Further, in the first housing 10 which is the main housing, the main control unit 107 receives the channel restoration instruction from the controller 2 via the wireless LAN interface unit 104 (YES in Step S105), the main control unit 107 restores the channels assigned to the left channel speaker 111-1, the height channel speaker 111-2, and the left surround channel speaker 111-3 accommodated in the second housing 11 to the left channel, the height channel , and the left surround channel, respectively (Step S106). Further, the main control unit 107 restores the channels assigned to the right channel speaker 121-1, the height channel speaker 121-2, and the right surround channel speaker 121-3 accommodated in the third housing 12 to the right channel, the height channel, and the right surround channel, respectively (Step S107). Then, the main control unit 107 transmits the channel restoration notification to each of the second housing 11 and the third housing 12 which are the sub-housings via the sub-housing interface unit 103 (Step S108).

Next, when, in the second housing 11 which is the sub-housing, the main control unit 115 receives the channel restoration notification from the first housing 10 which is the main housing via the main housing interface unit 112, the main control unit 115 causes the reproduction mode of the sub-reproduction unit 114 to shift from the channel change reproduction mode to the default reproduction mode. Similarly, when, in the third housing 12 which is the sub-housing, the main control unit 125 receives the channel reproduction notification from the first housing 10 which is the main housing via the main housing interface unit 122, the main control unit 125 causes the reproduction mode of the sub-reproduction unit 124 to shift from the channel change reproduction mode to the default reproduction mode (Step S109).

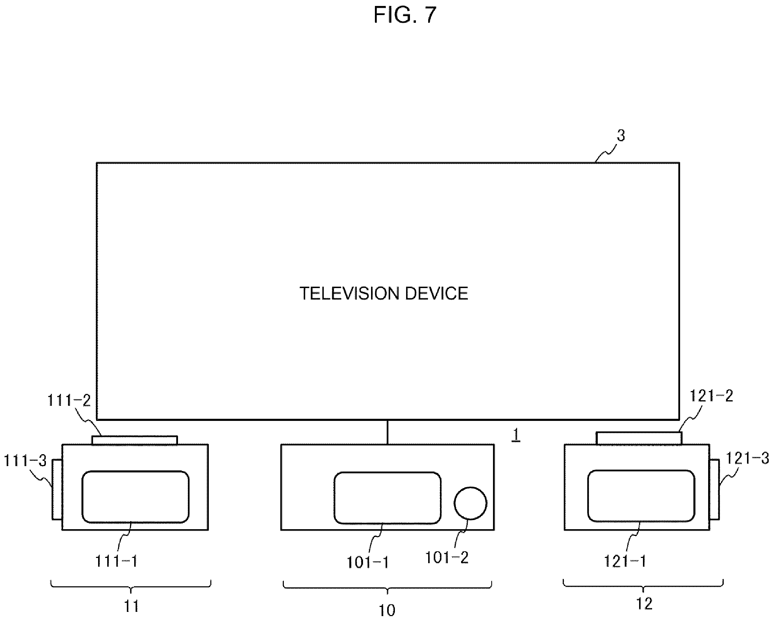

FIG. 7 is an explanatory view for illustrating an installation example in the default reproduction mode of the sound bar device 1.

In the home theater system in this embodiment illustrated in FIG. 1, in a case in which, for example, the television device 3 is replaced with a television device having a larger size and thus the width of the sound bar device 1 has become smaller than the screen width of the television device 3, as illustrated in FIG. 7, the second housing 11 and the third housing 12 are separated from the first housing 10. Thus, the second housing 11 is moved to the left end of the television device 3, and the third housing 12 is moved to the right end of the television device 3. In this manner, the left channel speaker 111-1 is arranged to emit the sound from a left-end lower portion of the television device 3 toward the front, and the height channel speaker 111-2 is arranged to emit the sound from the left-end lower portion of the television device 3 toward the upper front. In addition, the left surround channel speaker 111-3 is arranged to emit the sound from the left-end lower portion of the television device 3 toward the front left. Further, the right channel speaker 121-1 is arranged to emit the sound from a right-end lower portion of the television device 3 toward the front, and the height channel speaker 121-2 is arranged to emit the sound from the right-end lower portion of the television device 3 toward the upper front. In addition, the right surround channel speaker 121-3 is arranged to emit the sound from the right-end lower portion of the television device 3 toward the front right.

Thus, in a case in which such an arrangement is adopted, when the second housing 11 and the third housing 12 are operated in the default reproduction mode, the left channel audio signal is emitted by the left channel speaker 111-1 from the left-end lower portion of the television device 3 toward the front, the left surround channel audio signal is emitted by the left surround channel speaker 111-3 from the left-end lower portion of the television device 3 toward the front left, the right channel audio signal is emitted by the right channel speaker 121-1 from the right-end lower portion of the television device 3 toward the front, the right surround channel audio signal is emitted by the right surround channel speaker 121-3 from the right-end lower portion of the television device 3 toward the front right, and the height channel audio signals are emitted by the height channel speakers 111-2 and 121-2 from the left-end lower portion and the right-end lower portion of the television device 3 toward the upper front. Further, the center channel speaker 101-1 and the subwoofer channel speaker 101-2 are arranged in the front surface of the first housing 10 positioned at a middle lower portion of the television device 3, and hence the audio signals of the center channel and the subwoofer channel are emitted by the center channel speaker 101-1 and the subwoofer channel speaker 101-2 from the middle lower portion of the television device 3 toward the front. In this manner, an optimum surround sound environment corresponding to the screen width of the television device 3 can be achieved.

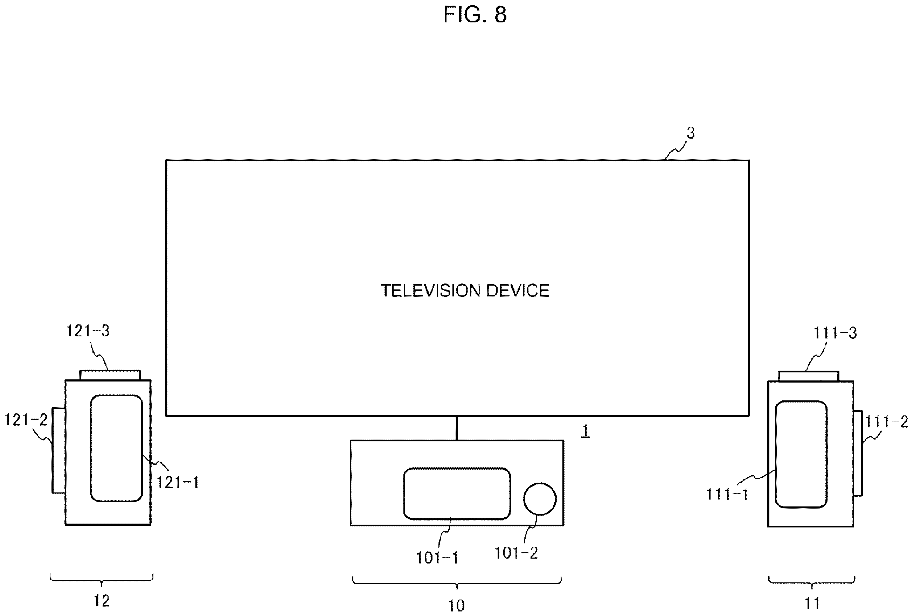

FIG. 8 is an explanatory view for illustrating an installation example in the channel change reproduction mode of the sound bar device 1.

In the home theater system in this embodiment illustrated in FIG. 1, in a case in which, for example, the television device 3 is replaced with a television device having a larger size and thus the width of the sound bar device 1 has become smaller than the screen width of the television device 3, as illustrated in FIG. 8, the second housing 11 and the third housing 12 are separated from the first housing 10. Thus, the second housing 11 is moved to the right end of the television device 3, and is installed so that the right side surface thereof faces downward such that the height channel speaker 111-2 is positioned on the right side. In addition, the third housing 12 is moved to the left end of the television device 3, and is installed so that the left side surface thereof faces downward such that the height channel speaker 121-2 is positioned on the left side. In this manner, the left channel speaker 111-1 is arranged to emit the sound from a right end of the television device 3 toward the front, and the height channel speaker 111-2 is arranged to emit the sound from the right end of the television device 3 toward the front right. In addition, the left surround channel speaker 111-3 is arranged to emit the sound from the right end of the television device 3 toward the upper front. Further, the right channel speaker 121-1 is arranged to emit the sound from a left end of the television device 3 toward the front, and the height channel speaker 121-2 is arranged to emit the sound from the left end of the television device 3 toward the front left. In addition, the right surround channel speaker 121-3 is arranged to emit the sound from the left end of the television device 3 toward the upper front.

Thus, in a case in which such an arrangement is adopted, when the second housing 11 and the third housing 12 are operated in the channel change reproduction mode, the left channel audio signal is emitted by the right channel speaker 121-1 from the left end of the television device 3 toward the front, the left surround channel audio signal is emitted by the height surround channel speaker 121-2 from the left end of the television device 3 toward the front left, the right channel audio signal is emitted by the left channel speaker 111-1 from the right end of the television device 3 toward the front, the right surround channel audio signal is emitted by the height surround channel speaker 111-2 from the right end of the television device 3 toward the front right, and the height channel audio signals are emitted by the right surround channel speaker 121-3 and the left surround channel speaker 111-3 from the left end and the right end of the television device 3 toward the upper front. Further, the center channel speaker 101-1 and the subwoofer channel speaker 101-2 are arranged in the front surface of the first housing 10 positioned at a middle lower portion of the television device 3, and hence the center channel audio signal and the subwoofer channel audio signal are emitted by the center channel speaker 101-1 and the subwoofer channel speaker 101-2 from the middle lower portion of the television device 3 toward the front. In this manner, an optimum surround sound environment corresponding to the screen width of the television device 3 can be achieved.

In the above, one embodiment of the present invention has been described.

According to this embodiment, the second housing 11 accommodating the left channel speaker 111-1 and the third housing 12 accommodating the right channel speaker 121-1 are each removable from the first housing 10 accommodating the center channel speaker 101-1. Thus, when the width of the sound bar device 1 is narrow as compared with the screen width of the television device 3, the second housing 11 and the third housing 12 are separated from the first housing 10, and those first to third housings 10 to 12 are arranged in accordance with the screen width of the television device 3. Thus, an optimum surround sound environment corresponding to the screen width of the television device 3 can be achieved.

Further, in this embodiment, the second housing 11 accommodates the height channel speaker 111-2 in the upper surface thereof and accommodates the left surround channel speaker 111-3 in the left side surface thereof. The third housing 12 accommodates the height channel speaker 121-2 in the upper surface thereof and accommodates the right surround channel speaker 121-3 in the right side surface thereof.

In this case, when the second housing 11 and the third housing 12 which are the sub-housings are set to the default reproduction mode, the first housing 10 which is the main housing extracts, from the multi-channel audio signal received from the television device 3, the audio signals of the left channel, the right channel, the height channel, the left surround channel, and the right surround channel. Then, the first housing 10 transmits a multi-channel audio signal including the audio signals of the left channel, the height channel, and the left surround channel to the second housing 11, and transmits a multi-channel audio signal including the audio signals of the right channel, the height channel, and the right surround channel to the third housing 12. Then, the second housing 11 extracts and reproduces, from the multi-channel audio signal received from the first housing 10, the audio signals of the left channel, the height channel, and the left surround channel, and outputs the reproduced audio signals from the left channel speaker 111-1, the height channel speaker 111-2, and the left surround channel speaker 111-3, respectively. The third housing 12 extracts and reproduces, from the multi-channel audio signal received from the first housing 10, the audio signals of the right channel, the height channel, and the right surround channel, and outputs the reproduced audio signals from the right channel speaker 121-1, the height channel speaker 121-2, and the right surround channel speaker 121-3, respectively.

Further, when the second housing 11 and the third housing 12 which are the sub-housings are set to the channel change reproduction mode, the first housing 10 which is the main housing extracts, from the multi-channel audio signal received from the television device 3, the audio signals of the left channel, the right channel, the height channel, the left surround channel, and the right surround channel. Then, the first housing 10 transmits a multi-channel audio signal including the audio signals of the right channel, the height channel, and the right surround channel to the second housing 11, and transmits a multi-channel audio signal including the audio signals of the left channel, the height channel, and the left surround channel to the third housing 12. Then, the second housing 11 extracts and reproduces, from the multi-channel audio signal received from the first housing 10, the audio signals of the right channel, the right surround channel, and the height channel, and outputs the reproduced audio signals from the left channel speaker 111-1, the height channel speaker 111-2, and the left surround channel speaker 111-3, respectively. The third housing 12 extracts and reproduces, from the multi-channel audio signal received from the first housing 10, the audio signals of the left channel, the left surround channel, and the height channel, and outputs the reproduced audio signals from the right channel speaker 121-1, the height channel speaker 121-2, and the right surround channel speaker 121-3, respectively.

Thus, according to this embodiment, in the case of the arrangement in which the second housing 11 and the third housing 12 are separated from the first housing 10, even in any of the installation examples illustrated in FIG. 7 and FIG. 8, the audio signal of each channel can be emitted from a correct position, and the flexibility of installation of each of the first to third housings 10 to 12 is increased. Thus, the convenience is improved.

The present invention is not limited to the embodiment described above, and various modifications may be made thereto within the scope of the gist of the present invention.

For example, in the embodiment described above, the first housing 10 is regarded as a main housing, and the second housing 11 and the third housing 12 are regarded as sub-housings. However, the present invention is not limited thereto. The first housing 10 may be regarded as a sub-housing, and any one of the second housing 11 and the third housing 12 may be regarded as a main housing. In this case, in the first housing 10 which is the sub-housing, in place of the subwoofer channel speaker 101-2, the sub-housing interface unit 103, the wireless LAN interface unit 104, the main reproduction unit 105, the audio signal transmission unit 106, and the main control unit 107 illustrated in FIG. 3, the main housing interface unit 112 or 122, the audio signal reception unit 113 or 123, the sub-reproduction unit 114 or 124, and the main control unit 115 or 125 illustrated in FIG. 4 or FIG. 5 are provided. Further, in the second housing 11 or the third housing 12 which is the main housing, in place of the main housing interface unit 112 or 122, the audio signal reception unit 113 or 123, the sub-reproduction unit 114 or 124, and the main control unit 115 or 125 illustrated in FIG. 4 or FIG. 5, the sub-housing interface unit 103, the wireless LAN interface unit 104, the main reproduction unit 105, the audio signal transmission unit 106, and the main control unit 107 illustrated in FIG. 3 are provided.

Further, in the embodiment described above, the subwoofer channel speaker 101-2 may be omitted from the first housing 10. Further, at least one of the height channel speaker 111-2 or the left surround channel speaker 111-3 may be omitted from the second housing 11. Similarly, at least one of the height channel speaker 121-2 or the right surround channel speaker 121-3 may be omitted from the third housing 12.

Further, in the embodiment described above, short-range wireless communication such as Bluetooth (trademark) is used for communication between the first housing 10 and the second housing 11 and communication between the first housing 10 and the third housing 12 (sub-housing interface unit 103 of FIG. 3, main housing interface unit 112 of FIG. 4, and main housing interface unit 122 of FIG. 5). However, the present invention is not limited thereto.

For example, only when the second housing 11 is separated from the first housing 10, short-range wireless communication such as Bluetooth (trademark) may be used for the communication between the first housing 10 and the second housing 11, and when both of the housings are coupled to each other by the mounting/removing mechanism 13-1, wired communication such as HDMI (trademark) may be used. In this case, the first housing 10 and the second housing 11 are provided with connection terminals for achieving wired connection when both of the housings are coupled to each other by the mounting/removing mechanism 13-1. When wired connection is established therebetween through those connection terminals, wired communication is used for communication therebetween, and, when no wired connection is established, short-range wireless communication is used.

Similarly, only when the third housing 12 is separated from the first housing 10, short-range wireless communication such as Bluetooth (trademark) may be used for the communication between the first housing 10 and the third housing 12, and when both of the housings are coupled to each other by the mounting/removing mechanism 13-2, wired communication such as HDMI (trademark) may be used. In this case, the first housing 10 and the third housing 12 are provided with connection terminals for achieving wired connection when both of the housings are coupled to each other by the mounting/removing mechanism 13-2. When wired connection is established therebetween through those connection terminals, wired communication is used for communication therebetween, and, when no wired connection is established, short-range wireless communication is used.

Further, in the embodiment described above, communication between the sound bar device 1 and the controller 2 is held via the access point 4. However, the present invention is not limited thereto. Communication between the sound bar device 1 and the controller 2 may be held by short-range wireless communication such as Bluetooth (trademark).

Further, in the embodiment described above, the case in which the sound bar device 1 is combined with the television device 3 has been described as an example. However, the present invention is not limited thereto. The present invention is widely applicable to a case in which the sound bar device 1 is used in combination with an audio-visual device.

### Reference Signs List

1: sound bar device 2: controller 3: television device
4: access point 5: network
10: first housing 11: second housing 12: third housing
13-1, 13-2: mounting/removing mechanism
101-1: center channel speaker
101-2: subwoofer channel speaker
111-1: left channel speaker
111-2, 121-2: height channel speaker
111-3: left surround channel speaker
121-1: right channel speaker
121-3: right surround channel speaker
102: television device interface unit
103: sub-housing interface unit
104: wireless LAN interface unit 105: main reproduction unit
106: audio signal transmission unit 107, 115, 125: main control unit
112, 122: main housing interface unit
113, 123: audio signal reception unit
114, 124: sub-reproduction unit

## Claims

1. A sound bar device, comprising a plurality of speakers, the sound bar device further comprising:
a first housing including, in a front surface thereof, a corresponding one of the plurality of speakers to which a center channel is assigned;
a second housing including, in a front surface thereof, a corresponding one of the plurality of speakers to which a left channel is assigned, the second housing being removable from and mountable on a left side of the first housing; and
a third housing including, in a front surface thereof, a corresponding one of the plurality of speakers to which a right channel is assigned, the third housing being removable from and mountable on a right side of the first housing;
wherein one of the first housing, the second housing, and the third housing is a main housing, and remaining two thereof are sub-housings,
wherein the main housing includes:
external device connection means for connecting to an external device configured to transmit a multi-channel audio signal;
main reproduction means for extracting and reproducing, from the multi-channel audio signal received from the external device, an audio signal of a channel assigned to the corresponding one of the plurality of speakers included in the main housing, and outputting the reproduced audio signal from the corresponding one of the plurality of speakers; and
audio signal transmission means for extracting, for each of the sub-housings, from the multi-channel audio signal received from the external device, an audio signal of a channel assigned to the corresponding one of the plurality of speakers included in the each of the sub-housings, and transmitting the extracted audio signal to the each of the sub-housings, and
wherein each of the sub-housings includes:
audio signal reception means for receiving the audio signal from the main housing; and
sub-reproduction means for reproducing the audio signal received from the main housing and outputting the reproduced audio signal from the corresponding one of the plurality of speakers included in the each of the sub-housings.

2. The sound bar device according to claim 1,
wherein each of the second housing and the third housing further includes, in an upper surface thereof, a corresponding one of the plurality of speakers to which a height channel is assigned, and
wherein the main housing further includes:
change instruction reception means for receiving a channel change instruction; and
channel setting means for changing, when the channel change instruction is received by the change instruction reception means, channels assigned to corresponding two of the plurality of speakers included in the second housing in the front surface and the upper surface thereof to the right channel and a right surround channel, respectively, and changing channels assigned to corresponding two of the plurality of speakers included in the third housing in the front surface and the upper surface thereof to the left channel and a left surround channel, respectively.

3. The sound bar device according to claim 2,
wherein the second housing further includes, in a left side surface thereof, a corresponding one of the plurality of speakers to which the left surround channel is assigned,
wherein the third housing further includes, in a right side surface thereof, a corresponding one of the plurality of speakers to which the right surround channel is assigned, and
wherein the channel setting means is further configured to change, when the channel change instruction is received by the change instruction reception means, each of channels assigned to the corresponding one of the plurality of speakers included in second housing in the left side surface thereof and the corresponding one of the plurality of speakers included in the third housing in the right side surface thereof to the height channel.

4. A method of setting a sound bar device including speakers of a plurality of channels,
the sound bar device further including:
a first housing including, in a front surface thereof, a corresponding one of the speakers to which a center channel is assigned;
a second housing including, in a front surface and an upper surface thereof, corresponding two of the speakers, the second housing being removable from and mountable on a left side of the first housing; and
a third housing including, in a front surface and an upper surface thereof, corresponding two of the speakers, the third housing being removable from and mountable on a right side of the first housing,
the method comprising:
assigning, when the second housing is arranged with the upper surface thereof being directed upward on the left side of the first housing and the third housing is arranged with the upper surface thereof being directed upward on the right side of the first housing, a left channel and a height channel to the respective corresponding two of the speakers included in the second housing in the front surface and the upper surface thereof, and assigning a right channel and the height channel to the respective corresponding two of the speakers included in the third housing in the front surface and the upper surface thereof; and
assigning, when the third housing is arranged with the upper surface thereof being directed leftward on the left side of the first housing and the second housing is arranged with the upper surface thereof being directed rightward on the right side of the first housing, the right channel and a right surround channel to the respective corresponding two of the speakers included in the second housing in the front surface and the upper surface thereof, and assigning the left channel and a left surround channel to the respective corresponding two of the speakers included in the third housing in the front surface and the upper surface thereof.

5. The method of setting a sound bar device according to claim 4,
wherein the second housing further includes, in a left side surface thereof, a corresponding one of the speakers,
wherein the third housing further includes, in a right side surface thereof, a corresponding one of the speakers, and
wherein the method further comprises:
further assigning, when the second housing is arranged with the upper surface thereof being directed upward on the left side of the first housing and the third housing is arranged with the upper surface thereof being directed upward on the right side of the first housing, the left surround channel to the corresponding one of the speakers included in the second housing in the left side surface thereof, and further assigning the right surround channel to the corresponding one of the speakers accommodated in the right side surface of the third housing; and
assigning, when the third housing is arranged with the upper surface thereof being directed leftward on the left side of the first housing and the second housing is arranged with the upper surface thereof being directed rightward on the right side of the first housing, the height channel to each of the corresponding one of the speakers included in the second housing in the left side surface thereof and the corresponding one of the speakers included in the third housing in the right side surface thereof.
